(19) Europäisches Patentamt
European Patent Office
Office européen des brevets

(11) **EP 4 567 670 A1**

(12) **EUROPEAN PATENT APPLICATION**

(43) Date of publication:
**11.06.2025 Bulletin 2025/24**

(21) Application number: **24217570.1**

(22) Date of filing: **04.12.2024**

(51) International Patent Classification (IPC):
**G06N 3/0455** (2023.01)   **G06N 3/047** (2023.01)
**G06N 3/0475** (2023.01)   **G06N 3/09** (2023.01)
**G06N 3/126** (2023.01)

(52) Cooperative Patent Classification (CPC):
**G06N 3/09; G06N 3/0455; G06N 3/047;
G06N 3/0475; G06N 3/126**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2023 US 202318531358**

(71) Applicant: **Infineon Technologies AG
85579 Neubiberg (DE)**

(72) Inventors:
• **GOLAGHA, Mojdeh
81249 Munich (DE)**
• **SATHYANIRANJAN, Anusha Sanmathi
81927 Munich (DE)**
• **SANTRA, Avik
Irvine, 92618 (US)**

(74) Representative: **Kraus & Lederer PartGmbB
Thomas-Wimmer-Ring 15
80539 München (DE)**

(54) **METHOD AND DEVICE FOR AUGMENTING TRAINING DATA OR RETRAINING A NEURAL NETWORK**

(57)     In accordance with an embodiment, a method for augmenting training data for a neural network includes: running a validation dataset through the neural network to provide a first output; analyzing the first output of the neural network to determine first correct predictions and first incorrect predictions using a classifier; mutating seeds of the validation dataset corresponding to the first correct predictions; running the mutated seeds through the neural network to provide a second output; analyzing the second output of the neural network to determine second correct predictions and second incorrect predictions using the classifier; determining whether there is an increase in neural network coverage for mutated seeds yielding the second correct predictions; and performing steps of mutating the seeds, running the mutated seeds through the neural network, and analyzing the second output of the neural network for the mutated seeds yielding the second correct predictions.

Fig. 1

**EP 4 567 670 A1**

**Description**

TECHNICAL FIELD

The present invention relates generally to electronic systems, and, in particular embodiments, to a system and method for augmenting training data or retraining a neural network.

BACKGROUND

Machine learning, and in particular, neural networks, represent a field of research and development that has a pervasive influence on various sectors, ranging from healthcare to autonomous vehicles. Neural networks comprise interconnected layers of algorithms, termed as "neurons," which "learn" from data input. However, in unified training methods across the landscape, one common obstacle encountered is that of limited availability of highly diverse data to feed into the system for purposes of enhanced learning.

The task of training a neural network is a repetitive one, with each input of data leading to a slight adjustment in the internal parameters of the neurons, thus gradually improving the performance of the network. However, the challenge is of further improving model performance when training on finite and sometimes scarce data. Unsurprisingly, machine learning models perform better when more training data is available.

In response to this, data augmentation techniques have been developed to artificially increase the size of training data by creating modified versions of the data already available. However, existing approaches to data augmentation have their drawbacks in that they are either manual, rely on human intuition, or are performed randomly without truly understanding what improvements the data needs to provide a richer and more dataset for more effective neural network training.

SUMMARY

According to some embodiments, a method as defined in claim 1 or 11 and a device as defined in claim 14 are provided. The dependent claims define further embodiments.

In accordance with an embodiment, a method for augmenting training data for a neural network includes: running a validation dataset through the neural network to provide a first output; analyzing the first output of the neural network to determine first correct predictions and first incorrect predictions using a classifier; mutating seeds of the validation dataset corresponding to the first correct predictions; running the mutated seeds through the neural network to provide a second output; analyzing the second output of the neural network to determine second correct predictions and second incorrect predictions using the classifier; determining whether there is an increase in neural network coverage for mutated seeds yielding the second correct predictions; and performing steps of mutating the seeds, running the mutated seeds through the neural network, and analyzing the second output of the neural network for the mutated seeds yielding the second correct predictions.

In accordance with another embodiment, a device for augmenting training data for a neural network includes: a processor; and a memory with program instructions stored thereon coupled to the processor, where the program instructions, when executed by the processor, enable the device to: run a validation dataset through the neural network to provide a first output, analyze the first output of the neural network to determine first correct predictions and first incorrect predictions using a classifier, mutate seeds of the validation dataset corresponding to the first correct predictions, run the mutated seeds through the neural network to provide a second output, analyze the second output of the neural network to determine second correct predictions and second incorrect predictions using the classifier, determine whether there is an increase in neural network coverage for mutated seeds yielding the second correct predictions, and perform steps of mutating the seeds, running the mutated seeds through the neural network, and analyzing the second output of the neural network for the mutated seeds yielding the second correct predictions.

In accordance with a further embodiment, method for retraining a neural network, includes: providing a first set of seeds to the neural network to provide a first output; applying a classifier to the first output to determine first seeds of the first set of seeds corresponding to first correct predictions by the classifier; mutating the first seeds to provide first mutated seeds; running the first mutated seeds through the neural network to provide a second output; applying the classifier to the second output to determine second seeds of the first set of seeds corresponding to second correct predictions by the classifier; determining whether there is an increase in neural network coverage for determined second seeds; and using at least one of the second seeds to retrain the neural network in response to a determination that the second seed of the second seeds causes an increase in neural network coverage.

BRIEF DESCRIPTION OF THE DRAWINGS

For a more complete understanding of the present invention, and the advantages thereof, reference is now made to the following descriptions taken in conjunction with the accompanying drawings, in which:

Figure 1 illustrates a system for generating augmented validation data according to an embodiment;

Figure 2 illustrates a process flow diagram of a data augmentation algorithm according to an embodiment;

Figure 3A illustrates a neural network according to an embodiment; and Figures 3B, 3C, 3D, 3E, 3F, 3G and 3H are tables that illustrate the operation of an embodiment neural network coverage algorithm as it related to the neural network of Figure 3A;

Figure 4 is a flow chart of method, according to an embodiment; and

Figure 5 a block diagram of a processing system that can be used to implement embodiment systems and algorithms.

Corresponding numerals and symbols in different figures generally refer to corresponding parts unless otherwise indicated. The figures are drawn to clearly illustrate the relevant aspects of the preferred embodiments and are not necessarily drawn to scale. To more clearly illustrate certain embodiments, a letter indicating variations of the same structure, material, or process step may follow a figure number.

DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

Embodiments of the present invention are directed to a system and method of augmenting verification and retraining data for a neural network. In some embodiments, a verification system provides an initial validation dataset to the neural network as input, and mutates the seeds of the initial validation dataset that correspond to correct predictions. Next, the system determines whether there is an increase in neural network coverage for the mutated seeds that yield correct predictions. These mutated seeds corresponding to increased neural network coverage can then be further and/or iteratively mutated, evaluated for accuracy, and evaluated for increased coverage to provide increasing numbers of mutated seeds. Mutated seeds from each cycle of seed mutation and evaluation can then be used to augment training data. In some embodiments, the resulting mutated seeds that the neural network correctly identifies and/or the mutated seeds that the neural network incorrectly identifies can be used as training data to retrain the neural network.

Advantages of embodiments of the present invention include the ability to automatically generate augmented datasets for neural network training and verification that result in increased validation coverage and more robust retraining. Embodiment systems and algorithms may be advantageously configured to guide the data augmentation process via neural network coverage analysis, which enables the algorithm to select data most suitable for mutation and generating new samples.

Embodiments of the present invention are summarized here. Other embodiments can also be understood from the entirety of the specification and the claims filed herein.

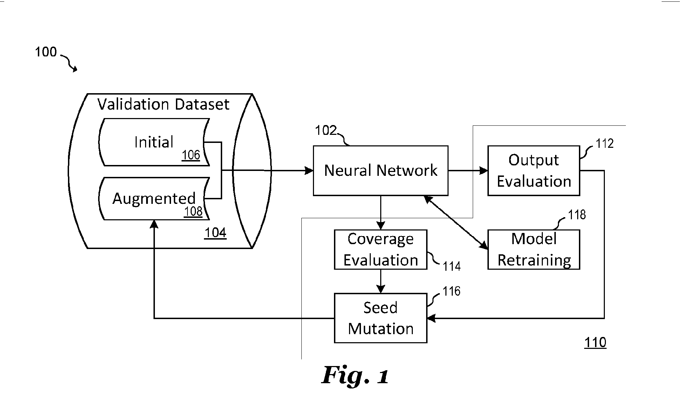

Figure 1 illustrates a system 100 for generating augmented training data. As shown, system 100 includes neural network 102, data augmentation system 110 and validation dataset 104. In an embodiment, neural network 102, may be a deep learning system designed to process and analyze data through adaptive algorithms and multiple layers of processing units. Neural network 102 may employ a deep neural network (DNN) architecture that includes a plurality of interconnected layers, including an input layer, one or more hidden layer, and an output layer, wherein each layer comprises multiple nodes or neurons. These neurons are designed to process incoming data and perform various transformations, including activating functions, weighted connections, and biases, to produce a refined output.

In neural network 102, the layers are interconnected in a hierarchical structure, with the input layer receiving raw data and the output layer providing the final prediction or classification. Each hidden layer progressively transforms the data as it passes through the network, enabling the detection and extraction of increasingly complex features and patterns. The inclusion of multiple hidden layers allows for the DNN to learn intricate, non-linear relationships within the data, thereby significantly improving the accuracy of predictions and classifications compared to shallow neural networks.

The neural network 102 is designed to adapt and optimize its internal parameters during a training phase, wherein a supervised learning algorithm adjusts the weights and biases of the connections between neurons to minimize the error between the network's output and the desired target. This optimization process, often referred to as backpropagation, involves propagating the error signals backward through the network, updating the parameters to minimize an overall cost function.

While the embodiments of the present invention are described with respect to DNNs, it should be understood that other types of neural networks may be used to implement neural network 102, including, but not limited to feed-forward neural networks, recurrent neural networks (RNN), convolutional neural networks (CNN), and radial basis function networks (RBFN).

In one embodiment, a hardware implementation of the neural network 102 may be realized using dedicated custom integrated circuits (ICs), such as application-specific integrated circuits (ASICs) or field-programmable gate arrays (FPGAs). The ASICs or FPGAs may be designed to execute parallel computation of neuron activation functions and weight updates, thereby enhancing processing speed and efficiency of neural network 102. Furthermore, the memory components for storing the weights, biases and intermediate data associated with the NN 102 may be implemented using embedded memory blocks, such as static random access memory (SRAM) cells or flip-flops, to facilitate low-latency data access and efficient operation.

In another embodiment, neural network 102 may be implemented using a combination of general-purpose processors (e.g., central processing units, GPUs) and specialized hardware accelerators specifically designed for executing neural network operations. The hardware accelerators may include matrix multiplication units, convolutional engine units, and activation function computation units, among others, which can be efficiently utilized for propagating input data through neural network 102 and updating the weights and biases during training. The specialized hardware accelerators may be interconnected to the general-purpose processors via a high-speed data bus or an interconnect fabric, allowing for efficient data exchange and parallel processing capabilities. Moreover, the hardware implementation of neural network 102 may be further optimized by tailoring the precision of arithmetic operations, such as using reduced-precision arithmetic or quantization techniques, to balance computational complexity, energy efficiency, and accuracy of the neural network. Alternatively, neural network 102 may be implemented using one or more general purpose processors without additional acceleration hardware.

As shown, validation dataset 104 includes initial validation dataset 106 and augmented dataset 108. In various embodiments, initial validation dataset 106 represents an initial set of validation data, and augmented dataset 108 represents additional validation data that is generated by data augmentation system 110.

In the context of implementing a neural network, initial validation dataset 106 may generated during the process of training neural network 102. For example, relevant data corresponding to the function of the neural network 102 is amassed, which could span from structured data, like databases and spreadsheet data, to unstructured data, such as images, text, audio, and video. Subsequently, the assembled dataset undergoes a pre-processing phrase that encompasses the removal of extraneous or duplicative information, addressing gaps in data and outliers, and normalizing and scaling the data to standardize the numeric ranges.

Following pre-processing, the collated dataset may be partitioned into subsets, that each serving a specific role in the neural network implementation. These subsets may include a training set, a validation set and a test set. The training set aids in adjusting the weights of the neural network during the training phase, while the validation set facilitates an unbiased evaluation and alteration of the model fit during training. The test set, used post-training, gauges the overall efficiency of the neural network. The initial validation dataset 106 may be obtained through a randomized partition of the data to counteract potential biases. Alternatively, initial validation dataset 106 may include some or all of the training set and/or the validation set. In some embodiments, each data point (also referred to as a "seed") in the validation dataset 104 set comes attached with its expected output in order to enable data augmentation system 110 to evaluate the accuracy of the prediction provided by neural network 102.

Augmented dataset 108 is produced by data augmentation system 110 and may be used for subsequent verification, testing and retraining of neural network 102 as described with respect to embodiments below.

Data augmentation system 110 includes output evaluation block 112, coverage evaluation block 114, seed mutation block 116 and model retraining block 118. In various embodiments, data augmentation system 110, which is configured to perform data augmentation according to embodiments of the present invention, may be implemented using software code that is executed on one or more processors.

Output evaluation block 112 is configured to evaluate the output of neural network 102 to determine whether or not the neural network 102 correctly classifies a seed provided by validation dataset 104. For example, output evaluation block 112 may compare the output of neural network 102 with an expected output associated with a particular seed provided by validation dataset 104. In some embodiments this expected output is stored along with the seed in validation dataset 104 and provided to output evaluation block 112 during operation or execution of data augmentations system 110.

Coverage evaluation block 114 is configured to determine the coverage (e.g., the utilization) of one or more neurons in neural network 102 according to a neural network coverage metric. Generally speaking, a neural network coverage metric is a measure used when evaluating the performance of a neural network to quantify the extent to which the neurons in the network have been activated or utilized during the evaluation process. In one embodiment, a k-multisectional neuron coverage (KMNC) metric is used as described further below; however, other metrics known in the art may be used including, but not limited to neuron coverage (NC), neuron boundary coverage (NBC), strong neuron activation coverage (SNAC), and a neural coverage (NLC). During operation, coverage evaluation block 114 may access weight values and other variables associated with neural network 102 via a digital interface (not shown) and derive the neural network coverage metric therefrom.

Seed mutation block 116 is configured to mutate the seeds provided by validation dataset 104 according to high-dimensional and/or low-dimensional mutations. With a high-dimensional mutation, the original seed is subjected to noise, perturbations and adversarial attacks, while still retaining the same label. With low-dimensional seed mutations, on the other hand, seeds are manipulated in a latent space, which is a compressed representation of data containing essential features or patterns and usually has lower dimensionality than the original data. Techniques such as noise addition, interpolation, extrapolation, linear-polation and resampling may be used for low-dimensional mutations, and the mutated versions are then transformed back to the high-dimensional space using, for example, an autoencoder such as a conditional variational autoencoder (CVAE).

High-dimensional transformations for various data types can be employed to enhance the functionality and performance of the systems utilizing such data. For instance, for infrared applications, infrared data can be subjected to transformations such as flipping and rotating, brightness and contrast alterations, blurring, scaling and cropping, resolution alteration, data mixup, and/or the addition of Gaussian noise. For time of flight (ToF) applications, ToF data, on the other hand, can benefit from time shifts, scaling, noise addition, temporal jitter, depth cropping and flipping, data interpolation, resolution alteration, and/or outlier injection. For radar applications, transformations on radar data can include compression (such a range compression), time shift, doppler shift, range scaling, noise addition, clutter addition, azimuth and elevation variation, and/or resolution change. Similarly, for audio applications audio data can be improved through time stretching, pitch shifting, background noise addition, volume variation, time and frequency domain variations, clipping and distortion, audio concatenation, speed perturbation, time change and/or echo generation. For ultrasound applications, ultrasound data can be transformed by introducing at least one of flipping and rotation, zooming and scaling, noise addition (e.g. speckle noise), contrast and brightness alteration, shadow and artifact simulation, texture variation, and/or resolution alteration. Lastly, for WiFi applications, WiFi data can be modified with at least one of RSSI scaling, signal dropout, signal interpolation, noise addition, temporal jitter, location perturbation, access point (AP) dropout and rotation, data splitting, or AP density variation to optimize the quality and utility of the data in their respective applications. It should be noted that these examples are by no means exhaustive, and other applications and transformations can be employed depending on the particular system and its specifications.

Model retraining block 118 is configured control neural network 102 to be retrained based on augmented dataset 108 generated by data augmentation system 110. In some embodiments, model retraining block 118 can be used to retrain neural network 102 on mutated seeds for which neural network 102 provides incorrect classification. Model retraining block 118 may retrain neural network 102, for example, by adjusting the weights and biases of the neural network 102 based on an error gradient between the predicted outcome and the actual outcome, and iteratively refining the model's performance over the course of multiple training epochs.

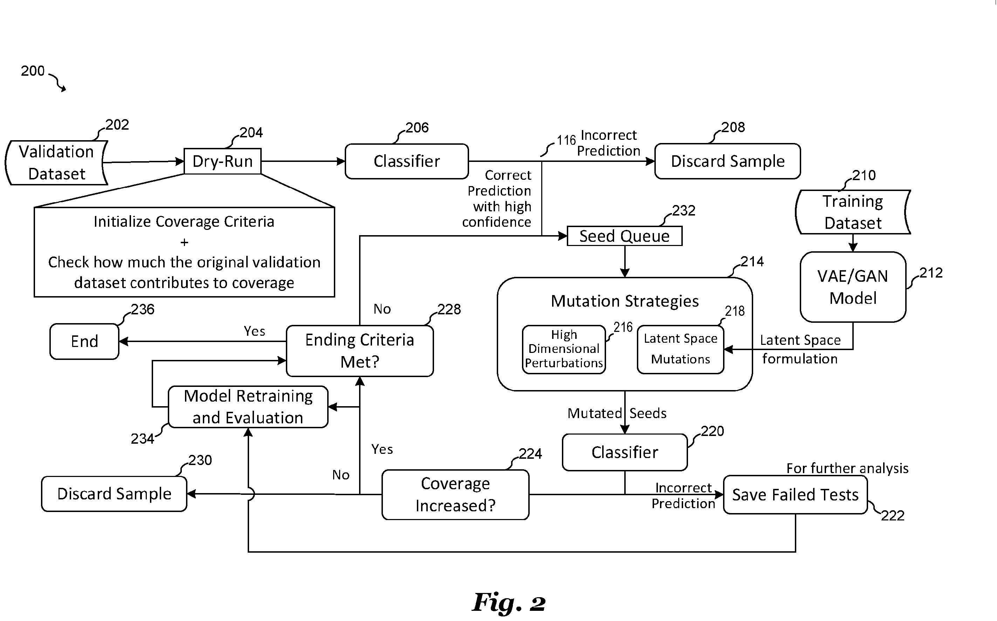

Figure 2 illustrates a process flow diagram of a data augmentation algorithm 200 according to an embodiment of the present invention.

Initially, the algorithm is provided with a validation dataset 202 and a model (a neural network) as input. During dry run 204, the algorithm creates a dictionary of existing states, capturing the coverage profile by examining weight ranges assigned to each neuron in different layers of the neural network. Neuron coverage may be measured at different levels of granularity, for example, but not limited to neuron coverage (NC) (indicating the proportion of neurons of the neural network that have been activated) and k-multisection coverage (KMNC) (indicating which k subsections of neuron weight ranges have been activated). To achieve this, the algorithm runs a validation dataset through the model during classifier step 206 to measure the neuron coverage and identify, for example, which parts of the weight range are activated. This analysis helps determine the extent of neuron coverage achieved using the validation dataset 202. The algorithm then selects a subset of the validation dataset that meets specific criteria, such as correct predictions with high confidence, to form the seed set.

With respect to the components illustrated in Figure 1, validation dataset 202 corresponds to initial validation dataset 106 stored in validation dataset 104. Neuron coverage may be determined using coverage evaluation block 114 to measure the stages of neural network 102.

After classifier step 206 in which the neural network 102 processes validation dataset 202, the algorithm determines which outputs of classifier step 206 constitute correct predictions, in which case the seeds corresponding to the correct predictions are entered into seed queue 232. Samples corresponding to incorrect predictions are discarded in step 208. In some embodiments, seeds corresponding to correct predictions are entered into seed queue when the prediction has a high level of confidence or a predetermined confidence threshold. The evaluation of the output of classifier step 206 may be performed, for example, using output evaluation block 112 shown in Figure 1.

Next, the seeds residing in seed queue 232 corresponding to correct predictions are mutated during step 214 using high dimensional perturbations 216 and/or low dimensional latent space mutations 218 discussed above with respect to seed mutation block 116 in Figure 1. In various embodiments, these mutations maintain the semantic integrity of the seeds. For example, if a seed is an image depicting a cat, it remains an image depicting the cat after its transformation.

As shown, latent space mutations are achieved by applying a variational autoencoder (VAE) and/or a Generative Adversarial Networks (GAN) 212 to a training dataset 210 to produce a latent space formulation. VAEs and GANs are two types of generative models that can learn to represent complex data distributions by discovering latent spaces (lower-dimensional representations of high-dimensional data) in the input data.

VAE models map inputs to a distribution in the latent space rather than a point. Given some input or seed, a VAE encodes it into a latent space representation. Introducing slight randomness or deviation in this latent representation enables the mutation process, decoding it back to the data space, and yielding a slightly changed or mutated version of the original input.

GAN models involve a generator network and a discriminator network. The generator creates data that is indistinguishable from the real data, while the discriminator tries to tell the difference between real and generated data. A random noise seed is usually the input to the generator network. Mutations can be achieved by altering this seed or introducing randomness, which results in generating varied output data. Additionally, mutations can be made by adding noise or transformations directly in a trained generator's output.

High-dimensional mutations may be specific to the data type or domain, while low-dimensional mutations may be applied to any data type and model, which involves the training of different autoencoders. In some embodiments, combining both high-dimensional and low-dimensional approaches advantageously reveals different missing data in training, identifies corner cases, and provides a more comprehensive evaluation of a model's performance. In some embodiments, these mutations can be applied separately to different classes, allowing for automatic differentiation in augmentations based on class-specific requirements. Accordingly, a user only needs to decide whether to apply augmentations to all the data or selectively to a particular class.

The mutated seeds produced in mutation step 214 serve as new data samples, which are then fed back into the neural network during classifier step 220. If the neural network does not correctly predict a new data sample, this new data sample is stored in a failing pool 222, for example to avoid wasting time and further resources. In some embodiments, the seeds of samples stored in failing pool 222 are later analyzed and/or used as data to retrain the neural network. In some embodiments, classifier step 220 is performed by providing augmented data set 108 to neural network 102, and evaluating the output of the neural network using output evaluation block 112 in the system of Figure 1.

For correctly predicted tests, their impact on neural network coverages is evaluated during coverage evaluation step 224 by measuring the neural coverage of the neural network using a neural network coverage metric for the mutated seed, and comparing the present neural network coverage with the preceding neural network coverage prior to the mutation. If the present coverage exceeds the previous coverage for a particular mutated seed, the mutated seed is provided back to seed queue for further mutation and/or analysis. On the other hand, if the present coverage does not exceed the previous coverage, the mutated seed is discarded in step 230, for example, to avoid wasting time and resources. In some embodiments, coverage evaluation step 224 can be performed using coverage evaluation block 114 shown in Figure 1.

When using the algorithm as a data augmentation technique, the newly generated data samples having increased neural network coverage are added to the training dataset, and the model is retrained during model training and evaluation step 234. Model retraining can be performed, for example, using model retraining block 118 shown in Figure 1. Next, the validation dataset is executed to see if accuracy and robustness have improved. Alternatively, embodiment data augmentation algorithms can be used for generating new data to test the model. In such embodiments, developers can be provided with the newly generated tests, updated accuracy results, and coverage increase reports for further analysis. This allows the developers to retrain the neural network by adjusting weights or modifying the architecture of the neural network itself.

In various embodiments, the seed mutation process proceeds in an iterative manner until a user-defined ending criterion is met (step 228) and the data augmentation process is terminated at step 236. This user-defined criterion may include, but is not limited to a predefined accuracy, a specific number of generated samples, or the end of an allotted period of time.

Embodiment augmentation algorithms provide numerous advantages. For example, in the case of direct augmentation, more data samples lead to an improved model having better accuracy and robustness. When utilizing augmented data for testing purposes, there is an advantageous increase in the number of test data samples, prediction results, and coverage improvement reports to enhance the overall effectiveness of the testing process.

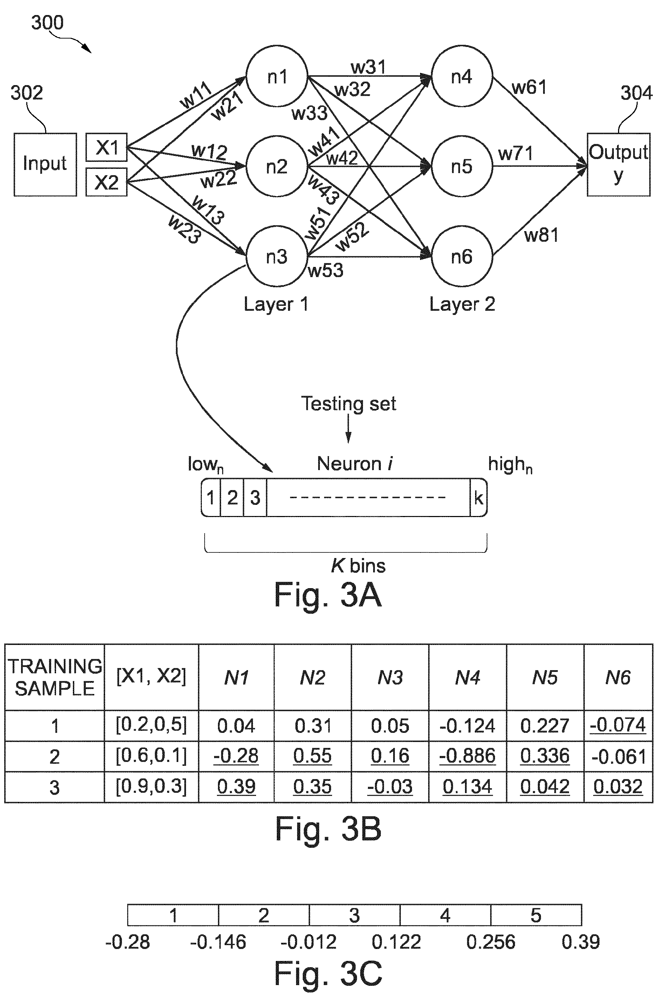

The illustrations of Figures 3A to 3F provide an example of a k-multisectional neuron coverage (KMNC) measurement according to an embodiment of the present invention. In some embodiments, this measurement may be performed, for example, using coverage evaluation block 114 shown in Figure 1.

Figure 3A illustrates a simple neural network 300 that is representative of many types of embodiment neural networks. Neural network 300 includes an input 302 having input data values x1 and x2, an output 304, and two hidden layers, layer 1 and layer 2, that each include three neurons. As shown, layer 1 includes neurons n1, n2 and n3, and layer 2 includes neurons n4, n5 and n6. Each neuron is associated with a set of weights. For example, neuron n1 is associated with weights w11 and w21, neuron n2 is associated with weights w12 and w22, and so on. Thus, for an example input of x1 = 0.1 and x2 = 0.5, the sum of weighted signals entering each neuron and output 304 can be expressed as follows:

$$n1 = (0.2 * w11) + (0.5 * w21)$$

$$n2 = (0.2 * w12) + (0.5 * w22)$$

$$n3 = (0.2 * w13) + (0.5 * w23)$$

$$n4 = (n1 * w31) + (n2 * w41) + (n3 * w51)$$

$$n5 = (n1 * w32) + (n2 * w42) + (n3 * w52)$$

$$n6 = (n1 * w33) + (n2 * w43) + (n3 * w53)$$

$$output = (n4 * w61) + (n5 * w71) + (n6 * w81).$$

For simplicity of illustration, a linear activation function is used for this example. However, any activation function could be applied to the weighted sum of each input in embodiment neural networks. Such activation function might include, but are not limited to Sigmoid (Logistic Activation), Hyperbolic Tangent (Tanh), Rectified Linear Unit (ReLU), Leaky Rectified Linear Unit (Leaky ReLU), Parametric Rectified Linear Unit (PReLU), Exponential Linear Unit (ELU), Swish, Softmax, Softplus, and Maxout.

Prior to the application of embodiment data augmentation algorithms, the neural network is trained. This example will assume that each hidden layer assumes the following weights during training:

Layer 1 Weights:

$$w11 = 0.3, w12 = -0.7, w13 = 0.5$$

$$w21 = -0.1, w22 = 0.8, w23 = -0.4$$

Layer 2 Weights:

$$w31 = 0.6, w32 = -0.2, w33 = 0.4$$

$$w41 = -0.5, w42 = 0.9, w43 = -0.7$$

$$w51 = 0.2, w52 = -0.3, w53 = 0.1.$$

It should be understood these weights are merely illustrative examples, as the weights assigned to embodiment neural networks will depend on the specific training data applied to the neural network and the particular architecture of the neural network.

In embodiments of the present invention, the data augmentation algorithm first initializes coverage criteria as described above with respect for step 204 in Figure 2. When using the KMNC neural network coverage metric, the embodiment algorithm obtains the range of values that each neuron n holds for all the training samples it encounters during training in order to produce histogram bins associated with each neuron. The number K of bins is chosen to suit the precision desired for the particular application. Generally, the higher the number K, the greater the precision of coverage. In alternative embodiments that utilize other activation functions besides the linear activation function, histograms for KMNC neural network coverage metric (or other coverage metrics) may be based on the summed weighted input of each neural prior to or following the application of the activation function.

Figure 3B illustrates a table showing the outputs n1, n2, n3, n4, n5 and n6 of each neuron over three different sets of training samples, [x1, x2] = [0.2, 0.5], [0.6, 0.1], [0.9, 0.3]. The highest and lowest output values for each neuron for the given training data is underlined, which is representative of its respective output range. From here, histogram bins may be assigned to each neuron. For example, neuron n1 having respective highest and lowest output values 0.39 and -0.28 is divided into five histogram bins: a first bin having bin boundaries between -0.28 and -0.146, a second bin having bin boundaries between -0.146 and -0.012, a third bin having bin boundaries between -0.012 and 0.122, a fourth bin having bin boundaries between 0.122 and 0.256, and a fifth bin having bin boundaries between 0.256 and 0.39 as shown in Figure 3C. It should be understood the selection of five evenly spaced bins is selected for the purpose of illustration. In alternative embodiments, greater or fewer than five bins may be used and/or the bins may be non-linearly spaced depending on the particular embodiment and its specifications.

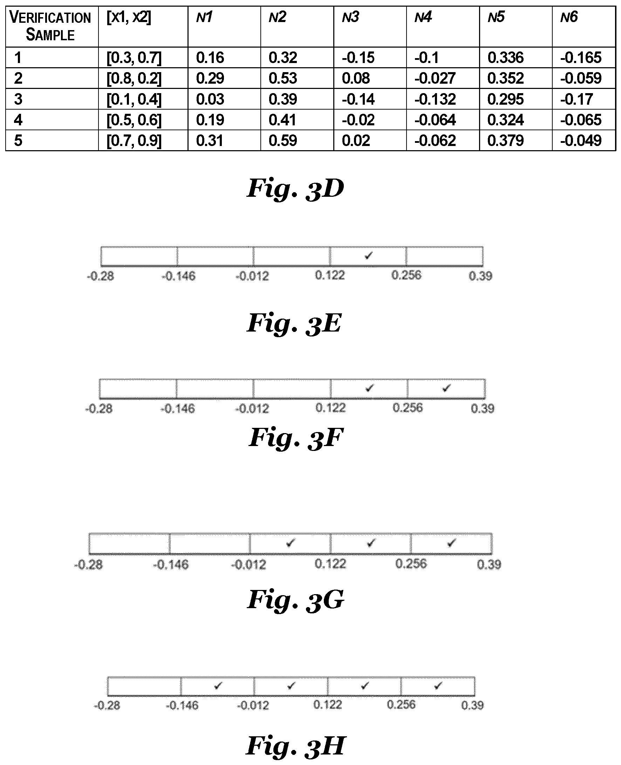

During the classifier step 206 described above with respect to Figure 2, validation dataset 202 is applied the neural network, during which the weighted summed values are monitored for each neuron. Figure 3D illustrates a table showing the outputs n1, n2, n3, n4, n5 and n6 for verification samples [x1, x2] = [0.3, 0.7], [0.8, 0.2], [0.1, 0.4], [0.5, 0.6], [0.7, 0.9] according to the present example. From this table, a histogram can be developed as illustrated in the histogram diagrams of Figures 3E, 3F, 3G, and 3H directed to neuron n1 as explained below.

As shown in the first line of the table of Figure 3D, the weighted sum of inputs for neuron n1 is 0.16, which falls within bin 4 of the KMNC histogram shown in Figure 3E. A check mark is placed in the fourth bin that covers values between 0.122 and 0.256 to signify that the fourth bin is "covered" by the first verification sample [x1, x2] = [0.3, 0.7].

The next verification sample in the second line of the table of Figure 3D provides a value of 0.29 for neuron n1, which falls in the fifth bin of the KMNC histogram shown in Figure 3F. Hence, a check mark is added to the fifth bin. Next, the third line of the table of Figure 3D provides a value of 0.29 for neuron n1, which falls in the third bin of the KMNC histogram shown in Figure 3G, so a check mark is added to the third bin. At this point, the third, fourth and fifth bin contain check marks and are considered to be "covered."

The fourth and fifth verification samples listed in the table of Figure 3D provide respective values of 0.19 and 0.31 which correspond to already covered bins 4 and 5 of the KMNC histogram. Hence, no additional histogram bins are covered by the verification data beyond the third, fourth and fifth histogram bins. From here, a KMNC neural network coverage metric can be calculated as follows:

$$\text{Coverage} = \frac{Number\ of\ covered\ bins\ in\ the\ Neural\ Network}{K * Total\ number\ of\ Neurons} \times 100.$$

Since neuron n1 is covered by three bins and K = 5, the coverage metric for neuron n1 is 3/5 * 100% = 60%. This coverage metric can also be applied all neurons n1, n2, n3, n4, n5 and n6. For example, if a total of 20 bins are covered in six neurons, the total coverage would be:

$$\text{Coverage} = \frac{20}{5 \times 6} \times 100\% = 66.67\%.$$

In an embodiment, once the initial coverage metric is determined, further coverage can be evaluated for mutated samples, for example, during coverage evaluation step 224 in which the coverage of the mutated is sees is evaluated and a determination is made whether or not a mutated seed (providing a correct output) increases the neural network coverage metric. For example, if a mutated seed has a value of [x1, y2] = [0, 1] and yields a value of n1 = -0.1, the second bin of the KMNC histogram would also be covered as shown in Figure 3H, which increases the number covered bins for neuron n1 from three to four. Thus, the coverage metric for neuron n1 becomes:

$$\text{Coverage} = \frac{4}{6} \times 100\% = 66.67\%,$$

which is an increase from 60% based on the initial validation data. If the total number of covered bins increases from 20 to 22 for all six neurons n1, n2, n3, n4, n5 and n6, the total coverage metric for all six neurons becomes:

$$\text{Coverage} = \frac{22}{5 \times 6} \times 100\% = 73.33\%,$$

which is an increase in coverage from 66.67% based on the initial validation data.

While the above example is specifically directed to the KMNC neural network coverage metric, it should be understood that other neural network coverage metrics could be used in alternative embodiments of the present invention. For example, Neuron Coverage (NC) is a metric where a neuron is considered "activated" if its value exceeds a user-specified threshold. This threshold is generally set according to the precision of coverage needed for a specific application. The coverage is subsequently determined as the ratio of "activated" neurons to the total number of neurons in the network. Similarly, neuron boundary coverage (NBC) analyzes the value range of a neuron covered by training data. The neuron is deemed to be "covered" if its value does not fall within that value range. Coverage in this context is defined as the ratio of covered neurons to all neurons.

There is also the strong neuron activation coverage (SNAC) metric which, like NBC, considers a neuron to be "covered" if its value is higher than the maximum value within the range of values. Coverage is measured as the ratio of covered neurons to all neurons. On the other hand, Neural coverage (NLC) is slightly different as it treats a single hidden layer as the basic computational unit rather than an individual neuron. NLC captures four critical attributes of neuron output distributions - divergence, correlation, density, and shape, providing an accurate description of how neural networks understand inputs via approximated distributions rather than neurons. It should be understood that these examples of neural network coverage metrics are non-limiting examples, as other neural network coverage metrics could also be used.

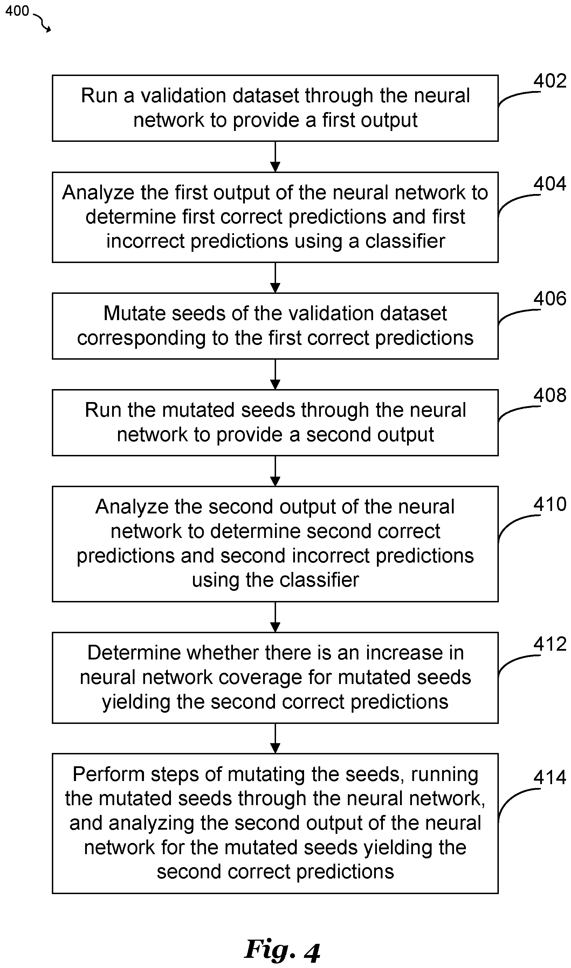

Figure 4 is a flow chart of method 400, according to an embodiment. According to an example, one or more process blocks of Figure 4 may be performed by system 100.

As shown in Figure 4, method 400 may include running a validation dataset through the neural network to provide a first output (block 402). For example, system 100 may run initial validation dataset 106 of validation dataset 104 through the neural network 102 to provide a first output, as described above. As further shown in Figure 4, method 400 may include analyzing the first output of the neural network to determine first correct predictions and first incorrect predictions using a classifier (block 404). For example, output evaluation block 112 of system 100 may analyze the first output of the neural network to determine first correct predictions and first incorrect predictions using a classifier, as described above. As also shown in Figure 4, method 400 may include mutating seeds of the validation dataset corresponding to the first correct predictions (block 406). For example, seed mutation block 116 of system 100 may mutate seeds of the validation dataset 104 corresponding to the first correct predictions, as described above. As further shown in Figure 4, method 400 may include running the mutated seeds through the neural network to provide a second output (block 408). For example, system 100 may run the mutated seeds through the neural network 102 to provide a second output, as described above.

Method 400 further includes analyzing the second output of the neural network to determine second correct predictions and second incorrect predictions using the classifier (block 410). For example, output evaluation block 112 of system 100 may analyze the second output of the neural network to determine second correct predictions and second incorrect predictions using the classifier, as described above. A determination is made as to whether there is an increase in neural network coverage for mutated seeds yielding the second correct predictions (block 412). For example, coverage evaluation block 114 of system 100 may determine whether there is an increase in neural network coverage for mutated seeds yielding the second correct predictions, as described above. As further shown in Figure 4, method 400 may include performing steps of mutating the seeds, running the mutated seeds through the neural network, and analyzing the second output of the neural network for the mutated seeds yielding the second correct predictions (block 414).

It should be noted that while Figure 4 shows example blocks of method 400, in some implementations, method 400 may include additional blocks, fewer blocks, different blocks, or differently arranged blocks than those depicted in Figure 4. Additionally, or alternatively, two or more of the blocks of method 400 may be performed in parallel.

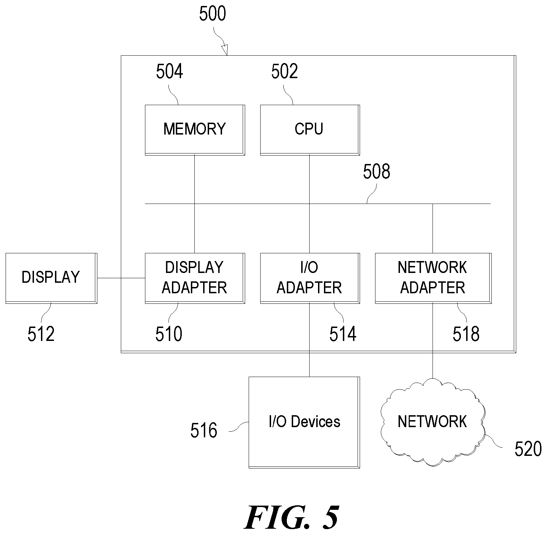

Referring now to Figure 5, a block diagram of a processing system 500 is provided in accordance with an embodiment of the present invention. The processing system 500 depicts a general-purpose platform and the general components and functionality that may be used to implement portions of embodiments described herein such as system 100 illustrated in Figure 1, algorithm 200 shown in Figure 2, and/or the algorithms detailed in Figures 3A to 3H.

Processing system 500 may include, for example, a central processing unit (CPU) 502, and memory 504 connected to a bus 508, and may be configured to perform the processes discussed above according to program instructions stored in memory 504 or on other non-transitory computer readable media. The processing system 500 may further include, if desired or needed, a display adapter 510 to provide connectivity to a local display 512 and an input-output (I/O) adapter 514 to provide an input/output interface for one or more input/output devices 516, such as a mouse, a keyboard, flash drive or the like.

The processing system 500 may also include a network interface 518, which may be implemented using a network adaptor configured to be coupled to a wired link, such as a network cable, USB interface, or the like, and/or a wireless/cellular link for communications with a network 520. The network interface 518 may also comprise a suitable receiver and transmitter for wireless communications. It should be noted that the processing system 500 may include other components. For example, the processing system 500 may include hardware components power supplies, cables, a motherboard, removable storage media, cases, and the like if implemented externally. These other components, although not shown, are considered part of the processing system 500. In some embodiments, processing system 500 may be implemented on a single monolithic semiconductor integrated circuit and/or on the same monolithic semiconductor integrated circuit as other disclosed system components.

Embodiments of the present invention are summarized here. Other embodiments can also be understood from the entirety of the specification and the claims filed herein.

Example 1. A method for augmenting training data for a neural network, the method including: running a validation dataset through the neural network to provide a first output; analyzing the first output of the neural network to determine first correct predictions and first incorrect predictions using a classifier; mutating seeds of the validation dataset corresponding to the first correct predictions; running the mutated seeds through the neural network to provide a second output; analyzing the second output of the neural network to determine second correct predictions and second incorrect predictions using the classifier; determining whether there is an increase in neural network coverage for mutated seeds yielding the second correct predictions; and performing steps of mutating the seeds, running the mutated seeds through the neural network, and analyzing the second output of the neural network for the mutated seeds yielding the second correct predictions.

Example 2. The method of example 1, further including using the mutated seeds yielding the second correct predictions as training data to further train the neural network.

Example 3. The method of one of examples 1 or 2, further including determining a neural network coverage metric for the validation dataset combined with the mutated seeds.

Example 4. The method of one of examples 1 to 3, where mutating the seeds includes performing high dimensional perturbations or latent space mutations.

Example 5. The method of example 4, where the latent space mutations are performed using a conditional variational autoencoder (CVAE).

Example 6. The method of one of examples 4 or 5, where the high dimensional perturbations include: for infrared applications: at least one of flipping and rotating, brightness and contrast alterations, gaussian noise, blur, scaling and cropping, resolution alteration, or data mixup; for time of flight (TOF) applications: at least one of time shift, scaling, noise addition, temporal jitter, depth cropping and flipping, data interpolation, resolution alteration, or outlier injection; for radar applications: at least one of range compression, time shift, doppler shift, range scaling, noise addition, clutter addition, azimuth and elevation variation, or resolution change; for audio applications: at least one of time change, pitch shift, background noise addition, volume variation, time and frequency domain variations, clipping and distortion, audio concatenation, speed perturbation, or echo generation; for ultrasound applications: at least one of: flipping and rotation, zooming and scaling, noise addition, contrast and brightness alteration, shadow and artifact simulation, texture variation, or resolution alteration; or for WiFi applications: at least one of RSSI scaling, signal dropout, signal interpolation, noise addition, temporal jitter, location perturbation, access point (AP) dropout and rotation, data splitting, or AP density variation.

Example 7. The method of one of examples 4 to 6 where the latent space mutations include interpolation, extrapolation, linear-polation and resampling.

Example 8. The method of one of examples 1 to 7, where determining whether there is an increase in neural network coverage includes determining a k-multisectional neuron coverage (KMNC).

Example 9. The method of example 8, where determining the KMNC includes determining an output range of each neuron based on the validation dataset, dividing the output range into K bins, determining a coverage of each bin with respect to the validation dataset, and determining whether there is an increased number of bins covered when using a respective mutated seed.

Example 10. The method of one of examples 1 to 9, where determining whether there is an increase in neural network coverage includes determining a neuron coverage (NC), a neuron boundary coverage (NBC), a strong neuron activation coverage (SNAC), or a neural coverage (NLC).

Example 11. The method of one of examples 1 to 10, where the neural network is a deep neural network.

Example 12. A device for augmenting training data for a neural network, the device including: a processor; and a memory with program instructions stored thereon coupled to the processor, where the program instructions, when executed by the processor, enable the device to: run a validation dataset through the neural network to provide a first output, analyze the first output of the neural network to determine first correct predictions and first incorrect predictions using a classifier, mutate seeds of the validation dataset corresponding to the first correct predictions, run the mutated seeds through the neural network to provide a second output, analyze the second output of the neural network to determine second correct predictions and second incorrect predictions using the classifier, determine whether there is an increase in neural network coverage for mutated seeds yielding the second correct predictions, and perform steps of mutating the seeds, running the mutated seeds through the neural network, and analyzing the second output of the neural network for the mutated seeds yielding the second correct predictions.

Example 13. The device of example 12, where the program instructions further enable the device to use the mutated seeds yielding the second correct predictions as training data to further train the neural network.

Example 14. The device of one of examples 12 or 13, where the program instructions further enable the device to mutate the seeds by performing high dimensional perturbations or latent space mutations.

Example 15. The device of example 14, where the latent space mutations are performed using a conditional variational autoencoder (CVAE).

Example 16. The device of one of examples 14 or 15, where the high dimensional perturbations include: for infrared applications: at least one of flipping and rotating, brightness and contrast alterations, gaussian noise, blur, scaling and cropping, resolution alteration, or data mixup; for time of flight (TOF) applications: at least one of time shift, scaling, noise addition, temporal jitter, depth cropping and flipping, data interpolation, resolution alteration, or outlier injection; for radar applications: at least one of range compression, time shift, doppler shift, range scaling, noise addition, clutter addition, azimuth and elevation variation, or resolution change; for audio applications: at least one of time change, pitch shift, background noise addition, volume variation, time and frequency domain variations, clipping and distortion, audio concatenation, speed perturbation, or echo generation; for ultrasound applications: at least one of: flipping and rotation, zooming and scaling, noise addition, contrast and brightness alteration, shadow and artifact simulation, texture variation, or resolution alteration; or for WiFi applications: at least one of RSSI scaling, signal dropout, signal interpolation, noise addition, temporal jitter, location perturbation, access point (AP) dropout and rotation, data splitting, or AP density variation.

Example 17. The device of one of examples 14 to 16, where the latent space mutations include interpolation, extrapolation, linear-polation and resampling.

Example 18. The device of one of examples 12 to 17, where the program instructions further enable the device to determine whether there is an increase in neural network coverage by determining a k-multisectional neuron coverage (KMNC).

Example 19. The device of example 18, where determining the KMNC includes determining an output range of each neuron based on the validation dataset, dividing the output range into K bins, determining a coverage of each bin with respect to the validation dataset, and determining whether there is an increased number of bins covered when using a respective mutated seed.

Example 20. The device of one of examples 12 to 19, where the program instructions further enable the device to determine whether there is an increase in neural network coverage by determining a neuron coverage (NC), a neuron boundary coverage (NBC), a strong neuron activation coverage (SNAC), or a neural coverage (NLC).

Example 21. The device of one of examples 12 to 20, where the neural network is a deep neural network.

Example 22. The device of one of examples 12 to 21, further including the neural network.

Example 23. A method for retraining a neural network, the method including: providing a first set of seeds to the neural network to provide a first output; applying a classifier to the first output to determine first seeds of the first set of seeds corresponding to first correct predictions by the classifier; mutating the first seeds to provide first mutated seeds; running the first mutated seeds through the neural network to provide a second output; applying the classifier to the second output to determine second seeds of the first set of seeds corresponding to second correct predictions by the classifier; determining whether there is an increase in neural network coverage for determined second seeds; and using at least one of the second seeds to retrain the neural network in response to a determination that the second seed of the second seeds causes an increase in neural network coverage.

Example 24. The method of example 23, where: applying the classifier to the second output further including applying the classifier to the second output to determine third seeds of the first set of seeds corresponding to incorrect predictions by the classifier; and using at least one of the third seeds to retrain the neural network.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

**Claims**

1. A method for augmenting training data for a neural network, the method comprising:

   running a validation dataset through the neural network to provide a first output;
   analyzing the first output of the neural network to determine first correct predictions and first incorrect predictions using a classifier;
   mutating seeds of the validation dataset corresponding to the first correct predictions;
   running the mutated seeds through the neural network to provide a second output;
   analyzing the second output of the neural network to determine second correct predictions and second incorrect predictions using the classifier;
   determining whether there is an increase in neural network coverage for mutated seeds yielding the second correct predictions; and
   performing steps of mutating the seeds, running the mutated seeds through the neural network, and analyzing the second output of the neural network for the mutated seeds yielding the second correct predictions.

2. The method of claim 1, further comprising using the mutated seeds yielding the second correct predictions as training data to further train the neural network.

3. The method of claim 1 or 2, further comprising determining a neural network coverage metric for the validation dataset combined with the mutated seeds.

4. The method of any one of claims 1 to 3, wherein mutating the seeds comprises performing high dimensional perturbations or latent space mutations.

5. The method of claim 4, wherein the latent space mutations are performed using a conditional variational autoencoder (CVAE).

6. The method of claim 4 or 5, wherein the high dimensional perturbations include:

> for infrared applications: at least one of flipping and rotating, brightness and contrast alterations, gaussian noise, blur, scaling and cropping, resolution alteration, or data mixup;
> for time of flight (TOF) applications: at least one of time shift, scaling, noise addition, temporal jitter, depth cropping and flipping, data interpolation, resolution alteration, or outlier injection;
> for radar applications: at least one of range compression, time shift, doppler shift, range scaling, noise addition, clutter addition, azimuth and elevation variation, or resolution change;
> for audio applications: at least one of time change, pitch shift, background noise addition, volume variation, time and frequency domain variations, clipping and distortion, audio concatenation, speed perturbation, or echo generation;
> for ultrasound applications: at least one of: flipping and rotation, zooming and scaling, noise addition, contrast and brightness alteration, shadow and artifact simulation, texture variation, or resolution alteration; or
> for WiFi applications: at least one of RSSI scaling, signal dropout, signal interpolation, noise addition, temporal jitter, location perturbation, access point (AP) dropout and rotation, data splitting, or AP density variation.

7. The method of any one of claims 4 to 6, wherein the latent space mutations include interpolation, extrapolation, linear-polation and resampling.

8. The method of any one of claims 1 to 7, wherein determining whether there is an increase in neural network coverage includes determining a k-multisectional neuron coverage (KMNC).

9. The method of claim 8, wherein determining the KMNC includes determining an output range of each neuron based on the validation dataset, dividing the output range into K bins, determining a coverage of each bin with respect to the validation dataset, and determining whether there is an increased number of bins covered when using a respective mutated seed.

10. The method of any one of claims 1 to 9, wherein determining whether there is an increase in neural network coverage includes determining a neuron coverage (NC), a neuron boundary coverage (NBC), a strong neuron activation coverage (SNAC), or a neural coverage (NLC).

11. A method for retraining a neural network, the method comprising:

> providing a first set of seeds to the neural network to provide a first output;
> applying a classifier to the first output to determine first seeds of the first set of seeds corresponding to first correct predictions by the classifier;
> mutating the first seeds to provide first mutated seeds;
> running the first mutated seeds through the neural network to provide a second output;
> applying the classifier to the second output to determine second seeds of the first set of seeds corresponding to second correct predictions by the classifier;
> determining whether there is an increase in neural network coverage for determined second seeds; and
> using at least one of the second seeds to retrain the neural network in response to a determination that the second seed of the second seeds causes an increase in neural network coverage.

12. The method of claim 11, wherein:

applying the classifier to the second output further comprising applying the classifier to the second output to determine third seeds of the first set of seeds corresponding to incorrect predictions by the classifier; and using at least one of the third seeds to retrain the neural network.

13. The method of any one of claims 1 to 12, wherein the neural network is a deep neural network.

14. A device for augmenting training data for a neural network, the device comprising:

a processor; and
a memory with program instructions stored thereon coupled to the processor, wherein the program instructions, when executed by the processor, enable the device to perform the method of any one of claims 1 to 13.

15. The device of claim 14, further comprising the neural network.

**Fig. 1**

*Fig. 2*

EP 4 567 670 A1

Fig. 3A

| TRAINING SAMPLE | [X1, X2] | N1 | N2 | N3 | N4 | N5 | N6 |
|---|---|---|---|---|---|---|---|
| 1 | [0.2,0,5] | 0.04 | 0.31 | 0.05 | -0.124 | 0.227 | -0.074 |
| 2 | [0.6,0.1] | -0.28 | 0.55 | 0.16 | -0.886 | 0.336 | -0.061 |
| 3 | [0.9,0.3] | 0.39 | 0.35 | -0.03 | 0.134 | 0.042 | 0.032 |

Fig. 3B

| | 1 | 2 | 3 | 4 | 5 |
|---|---|---|---|---|---|
| -0.28 | -0.146 | -0.012 | 0.122 | 0.256 | 0.39 |

Fig. 3C

| Verification Sample | [x1, x2] | N1 | N2 | N3 | N4 | N5 | N6 |
|---|---|---|---|---|---|---|---|
| 1 | [0.3, 0.7] | 0.16 | 0.32 | -0.15 | -0.1 | 0.336 | -0.165 |
| 2 | [0.8, 0.2] | 0.29 | 0.53 | 0.08 | -0.027 | 0.352 | -0.059 |
| 3 | [0.1, 0.4] | 0.03 | 0.39 | -0.14 | -0.132 | 0.295 | -0.17 |
| 4 | [0.5, 0.6] | 0.19 | 0.41 | -0.02 | -0.064 | 0.324 | -0.065 |
| 5 | [0.7, 0.9] | 0.31 | 0.59 | 0.02 | -0.062 | 0.379 | -0.049 |

*Fig. 3D*

*Fig. 3E*

*Fig. 3F*

*Fig. 3G*

*Fig. 3H*

400

402
Run a validation dataset through the neural network to provide a first output

404
Analyze the first output of the neural network to determine first correct predictions and first incorrect predictions using a classifier

406
Mutate seeds of the validation dataset corresponding to the first correct predictions

408
Run the mutated seeds through the neural network to provide a second output

410
Analyze the second output of the neural network to determine second correct predictions and second incorrect predictions using the classifier

412
Determine whether there is an increase in neural network coverage for mutated seeds yielding the second correct predictions

414
Perform steps of mutating the seeds, running the mutated seeds through the neural network, and analyzing the second output of the neural network for the mutated seeds yielding the second correct predictions

*Fig. 4*

500

504        502

MEMORY        CPU

508

DISPLAY    DISPLAY        I/O        NETWORK
           ADAPTER      ADAPTER      ADAPTER

512        510          514          518

516    I/O Devices      NETWORK

520

*FIG. 5*

Europäisches
Patentamt

European
Patent Office

Office européen
des brevets

## EUROPEAN SEARCH REPORT

**Application Number**

EP 24 21 7570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUO JIANMIN ET AL: "Coverage Guided Differential Adversarial Testing of Deep Learning Systems", IEEE TRANSACTIONS ON NETWORK SCIENCE AND ENGINEERING, IEEE, vol. 8, no. 2, 25 May 2020 (2020-05-25), pages 933-942, XP011864489, DOI: 10.1109/TNSE.2020.2997359 [retrieved on 2021-07-06] * abstract; figures 1, 2 * * page 935, column 2, line 1 - page 937, column 1, line 25 * | 1-15 | INV. G06N3/0455 G06N3/047 G06N3/0475 G06N3/09 G06N3/126 |
| A | ZHOU ZHIYANG ET AL: "DeepCon: Contribution Coverage Testing for Deep Learning Systems", 2021 IEEE INTERNATIONAL CONFERENCE ON SOFTWARE ANALYSIS, EVOLUTION AND REENGINEERING (SANER), IEEE, 9 March 2021 (2021-03-09), pages 189-200, XP033914013, DOI: 10.1109/SANER50967.2021.00026 [retrieved on 2021-05-06] * abstract; figure 2 * * page 192, column 1, line 6 - page 194, column 2, line 19 * * page 197, column 1, line 5 - line 36 * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 11 April 2025 | Rousset, Antoine |

EPO FORM 1503 03.82 (P04C01)